# FASCICULE DE BREVET EUROPEEN

(11) **EP 3 463 839 B1**
(45) Date de publication et mention de la délivrance du brevet: **25.03.2020**
(21) Numéro de dépôt: 17727637.5
(22) Date de dépôt: 05.05.2017
(51) Int. Cl.: B29D 30/38, B60C 9/00

(54) **NAPPE DROITE ET NAPPE À ANGLE COMPRENANT DES MONOFILAMENTS MÉTALLIQUES**
GERADE LAGE UND WINKLIGE LAGE AUS METALLISCHEN MONOFILAMENTEN
STRAIGHT PLY AND ANGLE PLY COMPRISING METALLIC MONOFILAMENTS

(30) Priorité: 27.05.2016 FR 1654766
(43) Date de publication de la demande: 10.04.2019
(73) Titulaire: Compagnie Générale des Etablissements Michelin, 63000 Clermont-Ferrand (FR)
(72) Inventeur: DAVAYAT, Gaëtan, 63040 CLERMONT-FERRAND CEDEX 9 (FR); CHAUVET, Cedric, 63040 CLERMONT-FERRAND CEDEX 9 (FR); COLIN, Eric, 63040 CLERMONT-FERRAND CEDEX 9 (FR)
(74) Mandataire: Louret, Sylvain
(86) Numéro de dépôt international: PCT/FR2017/051093
(87) Numéro de publication internationale: WO 2017/203119

(56) Documents cités:
- WO-A2-2015/014510
- US-A- 5 198 307
- US-A1- 2014 116 587

## Description

L'invention concerne une nappe droite, une nappe à angle, un bandage comprenant de telles nappes ainsi que des procédés de fabrication de telles nappes. L'invention s'applique à tout type de bandages, qu'ils soient de type pneumatique ou non. Par bandage pneumatique, on entend un bandage destiné à former une cavité en coopérant avec un élément support, par exemple une jante, cette cavité étant apte à être pressurisée à une pression supérieure à la pression atmosphérique. Par opposition, un bandage non pneumatique n'est pas apte à être pressurisé.

On connait de l'état de la technique un bandage pneumatique pour véhicule de tourisme comprenant une armature de carcasse ancrée dans deux bourrelets et surmontée radialement par une armature de sommet elle-même surmontée d'une bande de roulement qui est réunie aux bourrelets par deux flancs.

Dans un tel bandage pneumatique, l'armature de sommet comprend une armature de frettage et une armature de travail. L'armature de frettage est radialement intercalée entre la bande de roulement et l'armature de travail.

L'armature de travail comprend deux nappes de travail comprenant chacune une matrice polymérique, par exemple à base de caoutchouc naturel, et plusieurs éléments de renfort noyés dans la matrice d'élastomère. Chaque nappe de travail s'étend selon une direction principale, cette direction principale étant, au sein du bandage, confondue avec la direction circonférentielle du bandage.

Les éléments de renforts de chaque nappe de travail sont agencés côte à côte et font un angle allant de 10° à 40°, de préférence allant de 20° à 30° avec la direction principale de la nappe. En raison de cet angle, ces nappes de travail sont appelées nappes à angles par opposition à des nappes droites dans lesquelles les éléments de renforts font un angle strictement inférieur à 10°, de préférence inférieur à 5° avec la direction principale de la nappe.

Les éléments de renfort de chaque nappe de travail sont croisés d'une nappe de travail par rapport à l'autre. Chaque élément de renfort est constitué d'un monofilament métallique de diamètre égal à 0,30 mm tel que cela est décrit dans les documents WO2013/117476 et WO2013/117477.

Ces nappes de travail ont notamment pour fonction première de conférer au pneumatique une rigidité ou poussée de dérive (en anglais, "drift thrust" ou "cornering") élevée, nécessaire de manière connue pour l'obtention d'un bon comportement routier ("handling") sur véhicule automobile. D'autres performances sont également liées au bon fonctionnement des nappes de travail, comme par exemple la résistance au roulement, l'endurance haute vitesse ou encore l'énergie de rupture ("breaking energy").

Afin de fabriquer ces nappes, on réalise une étape de calandrage durant laquelle on agence les monofilaments métalliques les uns à côté des autres et on noie ces monofilaments métalliques dans la matrice polymérique. Cette étape est généralement appelée étape de calandrage.

Puis, on découpe plusieurs bandes dans la nappe droite de façon à obtenir une pluralité de bandes s'étendant chacune selon une direction principale et dans lesquelles les monofilaments métalliques de chaque bande font un angle compris entre 10° et 40° avec la direction principale de chaque bande. Ensuite, on aboute deux à deux les extrémités des bandes précédemment obtenues de façon à obtenir la nappe à angle dans laquelle les monofilaments métalliques font un angle compris entre 10° et 40° avec la direction principale de la nappe à angle.

Toutefois, chaque monofilament métallique présente une déformation élastique en torsion générant un couple de torsion autour de son axe principal pouvant être relativement élevé, par exemple correspondant à une déformation de l'ordre de plusieurs tours par dix mètres de monofilament métallique.

Une fois agencés les uns à côtés des autres, on observe un enroulement indésirable de la nappe droite, appelé également rebiquage et/ou une ondulation indésirable de la nappe droite. Cet enroulement et/ou cette ondulation indésirables rendent les étapes ultérieures de manutention de la nappe droite, de fabrication de la nappe à angle et de confection du bandage relativement difficiles.

On connaît des nappes pour pneus comprenant des monofilaments métalliques présentant déformations en torsion axiale, par exemple, des documents US 2014/0116587-A, WO 2015/014510-A et US 5198307-A.

L'invention a pour objectif de réduire voire de supprimer l'enroulement et/ou l'ondulation indésirables d'une nappe comprenant des monofilaments métalliques en tant qu'éléments de renfort.

A cet effet, l'invention a pour objet une nappe s'étendant selon une direction principale comprenant :
- une matrice polymérique,
- des monofilaments métalliques noyés dans la matrice polymérique, les monofilaments métalliques étant sensiblement parallèles les uns par rapport aux autres et à la direction principale de la nappe, chaque monofilament métallique présentant un axe principal et une déformation élastique en torsion autour de son axe principal,
la nappe comprenant des premier et deuxième groupes de monofilaments métalliques, chaque monofilament métallique du premier groupe présentant une déformation élastique en torsion dans un premier sens autour de son axe principal, chaque monofilament métallique du deuxième groupe présentant une déformation élastique en torsion dans un deuxième sens autour de son axe principal, le premier sens étant opposé au deuxième sens, et étant entendu que la déformation élastique en torsion est positive dans le premier sens et négative dans le deuxième sens, les monofilaments métalliques étant tels que:
∘ la valeur absolue la déformation élastique en torsion C de chaque monofilament métallique est telle que |C| ≤ 6 tours par dix mètres de monofilament métallique, et
∘ la moyenne S des déformations élastiques en torsion des monofilaments métalliques de la nappe est telle que -0,25 tours par dix mètres de monofilaments métalliques ≤ S ≤ +0,25 tours par dix mètres de monofilaments métalliques,
les monofilaments métalliques étant agencés les uns à côté des autres de façon à alterner un ou plusieurs monofilaments métalliques du premier groupe avec un ou plusieurs monofilaments métalliques du deuxième groupe.

La direction principale de la nappe droite selon l'invention est la direction générale selon laquelle s'étendent les bords longitudinaux de la nappe. Dans la nappe droite selon l'invention, les monofilaments métalliques sont sensiblement parallèles les uns par rapport aux autres et à la direction principale. On parle alors de nappe droite car chaque monofilament est sensiblement parallèle aux bords longitudinaux de la nappe.

Grâce aux déformations élastiques en torsion relativement peu élevées de chaque monofilament métallique, à l'alternance des monofilaments métalliques, et à la moyenne des déformations élastiques en torsion relativement peu élevée de l'ensemble des monofilaments métalliques, la nappe droite selon l'invention permet d'éviter l'enroulement et/ou l'ondulation indésirables. En effet, en alternant sur la largeur de la nappe, des monofilaments métalliques du premier groupe et des monofilaments métalliques du deuxième groupe, on répartit le couple de torsion que les monofilaments métalliques appliquent ponctuellement à la matrice polymérique et qui induit l'enroulement et/ou l'ondulation indésirables. Ainsi, la déformation élastique en torsion des monofilaments métalliques d'un groupe est compensée par la déformation élastique en torsion des monofilaments métalliques de l'autre groupe. D'autre part, la déformation élastique en torsion relativement peu élevé de chaque monofilament métallique permet d'agencer un ou plusieurs monofilaments métalliques du même groupe les uns à la suite des autres sans que cela ne crée un enroulement et/ou une ondulation indésirables. Cela confère une relative liberté d'agencement des monofilaments métalliques lors du procédé de fabrication de la nappe.

Conformément à l'invention, la déformation élastique en torsion est positive lorsque la torsion est dans le premier sens alors que la déformation élastique en torsion est négative lorsque la torsion est dans le deuxième sens. Dans une convention, on pourra convenir que le premier sens est le sens horaire et que le deuxième sens est le sens anti-horaire. Dans une autre convention, on pourra convenir que le premier sens est le sens anti-horaire et que le deuxième sens est le sens horaire.

On mesure la déformation élastique en torsion sur une longueur donnée de monofilament métallique, par exemple une longueur allant de 5 à 10 m et on ramène la valeur trouvée à 10 m afin d'obtenir le couple C. Pour ce faire, on dispose d'une table d'une grande longueur, la longueur de la table étant au moins égale à la longueur de monofilament métallique dont on mesure la déformation élastique en torsion, et on fixe une extrémité du monofilament métallique à une extrémité de la table. On déroule le monofilament métallique en prenant bien soin de maintenir le monofilament métallique pour éviter qu'il ne tourne sur lui-même autour de son axe principal. A l'autre extrémité, on fait pendre le monofilament métallique au bord de la table et on fixe à son extrémité une tige perpendiculairement à l'axe principal du monofilament métallique. Puis, on laisse l'extrémité pendante du monofilament métallique libre en rotation. On mesure alors le nombre de tours que fait la tige. Si la tige parcourt un tour incomplet, on rapporte à l'angle parcouru sur ce tour à la valeur non entière de ce tour. Ainsi, pour un angle de 180°, on aura 0,5 tour.

Par monofilament métallique, on entend un monofilament réalisé dans une matière métallique, cette matière pouvant être constituée d'une âme métallique et éventuellement d'une ou plusieurs couches de revêtement métallique ou non-métallique. De telles couches de revêtement peuvent par exemple être une couche de laiton, une couche d'une composition adhésive ou encore une couche d'un primaire d'adhésion. Un tel monofilament métallique est droit, c'est-à-dire que son axe principal décrit une trajectoire sensiblement rectiligne lorsqu'il est tenu sous faible tension. En d'autres termes, il n'est pas préformé, ne présente aucune forme en hélice ou en vague et n'est pas assemblé (au contact) d'un autre monofilament métallique. Un monofilament est un filament unique et pas un assemblage de plusieurs filaments.

Par valeur absolue, on entend la valeur absolue au sens mathématique, c'est-à-dire si C est positif, la valeur absolue de C est C et, si C est négatif, la valeur absolue de C est -C.

Par moyenne, on entend la moyenne arithmétique des valeurs individuelles de déformation élastique mesurées sur 10 cm de nappe selon la direction sensiblement perpendiculaire aux monofilaments métalliques.

L'invention a également pour objet une nappe s'étendant selon une direction principale comprenant :
- une matrice polymérique,
- des monofilaments métalliques noyés dans la matrice polymérique, les monofilaments métalliques étant sensiblement parallèles les uns par rapport aux autres et faisant un angle compris entre 10° et 40° avec la direction principale de la nappe, chaque monofilament métallique présentant un axe principal et une déformation élastique en torsion autour de son axe principal,
la nappe comprenant des premier et deuxièmes groupes de monofilaments métalliques, chaque monofilament métallique du premier groupe présentant une déformation élastique en torsion dans un premier sens autour de son axe principal, chaque monofilament métallique du deuxième groupe présentant une déformation élastique en torsion dans un deuxième sens autour de son axe principal, le premier sens étant opposé au deuxième sens, et étant entendu que la déformation élastique en torsion est positive dans le premier sens et négative dans le deuxième sens, les monofilaments métalliques étant tels que :
∘ la valeur absolue de la déformation élastique en torsion de chaque monofilament métallique est telle que |C| ≤ 6 tours par dix mètres de monofilament métallique, et
∘ la moyenne S des déformations élastiques en torsion des monofilaments métalliques de la nappe est telle que -0,25 tours par dix mètres de monofilaments métalliques ≤ S ≤ +0,25 tours par dix mètres de monofilaments métalliques,
les monofilaments métalliques étant agencés les uns à côté des autres de façon à alterner un ou plusieurs monofilaments métalliques du premier groupe avec un ou plusieurs monofilaments métalliques du deuxième groupe.

Tout comme dans le mode de réalisation précédent, la direction principale de la nappe à angle selon l'invention est la direction générale selon laquelle s'étendent les bords longitudinaux de la nappe. Dans la nappe à angle selon l'invention, les monofilaments métalliques sont sensiblement parallèles les uns par rapport aux autres et font un angle compris entre 10° et 40° avec la direction principale de la nappe. On parle alors de nappe à angle car chaque monofilament métallique forme un angle supérieur ou égale à 10° avec les bords longitudinaux de la nappe. Par valeur absolue, on entend la valeur absolue au sens mathématique, c'est-à-dire si C est positif, la valeur absolue de C est C et, si C est négatif, la valeur absolue de C est -C. Par moyenne, on entend la moyenne arithmétique des valeurs individuelles de déformation élastique mesurées sur 10 cm de nappe selon la direction sensiblement perpendiculaire aux monofilaments métalliques.

Tout comme dans le mode de réalisation précédent, les déformations élastiques en torsion relativement peu élevées de chaque monofilament métallique, l'alternance des monofilaments métalliques et la moyenne des déformations élastiques en torsion relativement peu élevée de l'ensemble des monofilaments métalliques, permettent d'éviter l'enroulement et/ou l'ondulation indésirable de la nappe à angle selon l'invention.

Avantageusement, les monofilaments métalliques sont tels que la valeur absolue de la déformation élastique en torsion de chaque monofilament métallique est telle que |C| ≤ 5 tours par dix mètres de monofilament métallique. Ainsi, en plus d'éviter l'enroulement et/ou l'ondulation indésirable, on facilite le passage des monofilaments métalliques dans la calandre permettant de fabriquer la nappe.

Avantageusement, chaque monofilament métallique présente un diamètre allant de 0,10 mm à 0,50 mm, de préférence allant de 0,20 mm à 0,40 mm et plus préférentiellement allant de 0,25 mm à 0,35 mm.

De préférence, l'âme est en acier pouvant présenter une microstructure perlitique, ferritique, austénitique, bainitique, martensitique ou une microstructure issue d'un mélange de ces microstructures.

De préférence, l'acier comprend un taux de carbone allant de 0,2 % à 1 % en masse et plus préférentiellement de 0,4 % à 0,9 % en masse. De préférence, l'acier comprend un taux de manganèse allant de 0,3 % à 0,7 % en masse, un taux de silicium allant de 0,1 % à 0,3 % en masse, un taux de phosphore allant au plus jusqu'à 0,045 % borne incluse en masse, un taux de soufre allant au plus jusqu'à 0,045 % borne incluse en masse et un taux d'azote allant au plus jusqu'à 0,008 % borne incluse en masse. De façon optionnelle, l'acier comprend au plus 0,1 % borne incluse, de préférence 0,05 % borne incluse, et plus préférentiellement 0,02 % borne incluse en masse de vanadium et/ou de molybdène.

Dans un mode de réalisation, l'acier utilisé comprend moins de 0,5 % borne incluse, de préférence au plus 0,05 % borne incluse, et plus préférentiellement au plus 0,02 % borne incluse en masse de chrome.

Dans un autre mode de réalisation utilisant de l'acier dit inoxydable, l'acier comprend au moins 0,5 % borne incluse, de préférence au moins 5 % borne incluse et plus préférentiellement au moins 15 % borne incluse en masse de chrome.

De préférence, un acier inoxydable comprend au moins 2% borne incluse, de préférence au moins 4% borne incluse et plus préférentiellement au moins 6% en masse de nickel.

De préférence, la matrice polymérique est une matrice élastomérique, de préférence élastomérique diénique, c'est-à-dire qu'elle comprend au moins un élastomère, de préférence un élastomère diénique. Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère diénique est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères. Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4.

La matrice polymérique peut comporter un seul ou plusieurs élastomère(s) diénique(s), également tout ou partie des additifs habituellement utilisés dans les matrices destinées à la fabrication de bandages, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en oeuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la matrice polymérique est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce. Par pce, on entend, de manière connue pour l'homme du métier, pour cent unités de poids d'élastomère.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m2/g, de préférence de 30 à 400 m2/g.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, chaque matrice polymérique, que ce soit celle de la nappe droite ou de la nappe à angle, présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans un mode de réalisation préféré, la densité de monofilaments métalliques va de 120 à 180 monofilaments métalliques par décimètre, plus préférentiellement de 130 à 170 monofilaments métalliques par décimètre.

De façon connue par l'homme du métier, la densité d'éléments de renfort, par exemple de monofilaments métalliques, est le nombre d'éléments de renfort agencés les uns à côtés de autres par unité de longueur (ici par décimètre) selon une direction perpendiculaire à la direction selon laquelle s'étendent les éléments de renfort.

L'invention a également pour objet un bandage comprenant au moins une nappe droite et/ou à angle telle que décrites ci-dessus.

L'invention s'applique particulièrement aux bandages destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

De préférence, le bandage comprend un sommet surmonté d'une bande de roulement, deux flancs, deux bourrelets, chaque flanc reliant chaque bourrelet au sommet, une armature de carcasse ancrée dans chacun des bourrelets et s'étendant dans les flancs jusque dans le sommet, une armature de sommet radialement intercalée entre l'armature de carcasse et la bande de roulement, l'armature de sommet comprenant une nappe droite et/ou à angle telle que décrites ci-dessus.

Plus préférentiellement, l'armature de sommet comprend une armature de travail comprenant au moins une nappe à angle, de préférence deux nappes à angles, telles que décrites ci-dessus et une armature de frettage radialement intercalée entre l'armature de travail et la bande de roulement.

Encore plus préférentiellement, l'armature de frettage comprend au moins un élément de renfort textile de frettage.

Dans un mode de réalisation préféré, la densité d'élément de renfort textile de frettage va de 80 à 120 éléments de renfort par décimètre et plus préférentiellement de 90 à 110 éléments de renfort par décimètre.

Avantageusement, chaque élément de renfort textile de frettage présente une contraction thermique CT après 2 min à 185°C telle que CT < 7,5%. Il s'agit en d'autres termes de la contraction relative de ces éléments de renfort textile de frettage qui est par définition inférieure à 7,5% dans les conditions énoncées ci-après du test. CT est de préférence inférieure à 3,5%, plus préférentiellement inférieur à 3%, valeurs qui se sont révélées optimales pour la stabilité de fabrication et de dimensionnement des bandages, en particulier lors des phases de cuisson et refroidissement des ces derniers.

La grandeur CT est mesurée, sauf précisions différentes, selon la norme ASTM D1204-08, par exemple sur un appareil du type « TESTRITE », sous une pré-tension dite standard de 0,5 cN/tex (donc ramenée au titre ou densité linéique de l'échantillon testé). A longueur constante, on mesure également le maximum de la force de contraction (notée F_{C}) à l'aide du test ci-dessus, cette fois à une température de 180°C et sous 3% d'élongation. Cette force de contraction F_{C} est préférentiellement supérieure à 20 N (Newton). Une force de contraction élevée s'est révélée particulièrement favorable à la capacité de frettage des éléments de renfort textiles de frettage en matériau textile thermorétractile, vis-à-vis de l'armature de sommet du bandage lorsque ce dernier s'échauffe sous une haute vitesse de roulage.

Les grandeurs CT et Fc ci-dessus peuvent être indistinctement mesurées sur les éléments de renfort textiles de frettage initiaux encollés avant leur incorporation dans la nappe et le bandage, ou bien mesurée sur ces éléments de renfort textiles de frettage une fois extraits du bandage vulcanisé et de préférence « dégommés » (c'est-à-dire débarrassés du caoutchouc qui les enrobe).

Tout matériau textile thermorétractile vérifiant les caractéristiques de contraction CT énoncées ci-dessus convient. De préférence, ce matériau textile thermorétractile est choisi dans le groupe constitué par les polyamides, les polyesters et les polycétones. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Sont également utilisables, dans la mesure où ils vérifient la caractéristique CT préconisée, des renforts hybrides constitués de deux (au moins deux) matériaux différents tels que par exemple des câblés hybrides aramide/nylon, aramide/polyester, aramide/polycétone. Selon un mode de réalisation particulièrement préférentiel, le matériau textile thermorétractile est un polyester, notamment PET ou PEN, tout particulièrement un PET. Plus préférentiellement encore, le polyester utilisé est un PET HMLS (« *High Modulus Low Shrinkage* »).

L'invention a encore pour objet un procédé de fabrication d'une nappe droite telle que décrite ci-dessus, le procédé comprenant une étape de calandrage au cours de laquelle :
- on agence les monofilaments métalliques les uns à côté des autres de façon à alterner un ou plusieurs monofilaments métalliques du premier groupe avec un ou plusieurs monofilaments métalliques du deuxième groupe
- on noie les monofilaments métalliques dans la matrice polymérique.

De préférence, le procédé comprend, préalablement à l'étape de calandrage, une étape de dressage dans laquelle on réduit les contraintes résiduelles de chaque monofilament métallique en exerçant des efforts sensiblement perpendiculairement à l'axe principal du monofilament métallique.

Le dressage permet de réduire le cintre du monofilament métallique. Le cintre est généré par la présence de contraintes résiduelles en compression en surface du monofilament métallique. Si ces contraintes résiduelles en compression sont irrégulièrement réparties, cela engendre un déséquilibre localisé de contraintes de part et d'autre de l'axe principal du monofilament métallique et donc un cintre d'autant plus important que la répartition est inhomogène et que les valeurs des contraintes résiduelles en compression positionnées de part et d'autre de l'axe principal sont différentes.

Le dressage visant à réduire, voire supprimer, les contraintes résiduelles, peut être réalisé selon différents manières. Une manière connue de l'homme du métier est d'utiliser un dressage par torsion, tel que décrit dans WO2015014510. Toutefois, un tel dressage limite fortement la vitesse de défilement et donc de production du monofilament métallique. En effet, en raison de la torsion qui doit être infligée au monofilament métallique et qui doit être suffisante pour réduire les contraintes résiduelles, la vitesse de défilement du monofilament métallique est inférieure à 300 m.min-1 et plus généralement de l'ordre de 250 m.min-1. Dans le mode de réalisation dans lequel l'étape de dressage est réalisée en exerçant des efforts en flexion perpendiculairement à l'axe principal du monofilament métallique et en tension selon l'axe principal du monofilament métallique et non des efforts de torsion, la vitesse de défilement, et donc de production monofilament métallique peut être beaucoup plus élevée, notamment supérieure à 500 m.min-1, et généralement supérieure à 600 m.min-1.

En outre, l'utilisation d'un dressage par torsion engendre une ondulation du monofilament métallique. Lors de la fabrication de la nappe, on agence les monofilaments métalliques parallèlement les uns à côté des autres. En raison de l'ondulation précédemment décrite, il arrive que deux monofilaments métalliques adjacents l'un à l'autre se touchent ce qui inacceptable. En effet, lors des efforts répétés de la nappe lors du fonctionnement du pneumatique, les deux monofilaments métalliques au contact l'un de l'autre vont frotter et s'user prématurément.

Dans un mode de réalisation préféré, on exerce les efforts au moyen d'un dispositif de dressage comprenant :
- une succession d'une première série d'éléments presseurs
- une succession d'une deuxième série d'éléments presseurs les éléments presseurs de la première série exerçant des efforts sur le monofilament métallique en sens opposé aux éléments presseurs de la deuxième série.

Avantageusement, chaque élément presseur comprend une poulie montée en rotation autour d'un axe, les axes des éléments presseurs de chaque première et deuxième série étant sensiblement alignés les uns avec les autres le long respectivement de première et deuxième directions sensiblement parallèles à la direction de défilement du monofilament métallique.

Dans un mode de réalisation particulièrement préféré, on exerce les efforts au moyen de premier et de deuxième dispositifs de dressage, chaque premier et deuxième dispositif de dressage comprenant :
- une succession d'une première série d'éléments presseurs
- une succession d'une deuxième série d'éléments presseurs
les éléments presseurs de la première série de chaque premier et deuxième dispositif de dressage exerçant des efforts sur le monofilament métallique en sens opposé aux éléments presseurs respectivement de la deuxième série de chaque premier et deuxième dispositif de dressage.

Avantageusement, les éléments presseurs du premier dispositif de dressage exercent leurs efforts selon une direction sensiblement perpendiculaire à la direction selon laquelle les éléments presseurs du deuxième dispositif de dressage exercent leurs efforts.

De préférence, postérieurement à l'étape de dressage, on stocke chaque monofilament métallique sur une bobine de stockage, chaque bobine de stockage comprenant un indicateur d'appartenance du monofilament métallique au premier ou au deuxième groupe monofilaments métalliques.

De préférence, postérieurement à l'étape de dressage, on stocke chaque monofilament métallique sur une bobine de stockage, chaque bobine de stockage comprenant la valeur de la déformation élastique en torsion du monofilament métallique.

Avantageusement, la nappe comprend m successions de Ni≥1 monofilaments métalliques du premier groupe, i allant de 1 à m, et n successions de Mj≥1 monofilaments métalliques du deuxième groupe, j allant de 1 à n.

Dans un mode de réalisation dans lequel chaque succession de monofilament(s) métallique(s) comprend le même nombre de monofilament(s) métallique(s), on a, pour chaque succession de Ni≥1 monofilaments métalliques du premier groupe, Ni=N, et /ou pour chaque succession de Mj≥1 monofilaments métalliques du deuxième groupe, Mj=M. Préférentiellement, N=M.

Dans un autre mode de réalisation, il existe au moins deux valeurs k et k' entre 1 et m, telle que Nk≠Nk' et/ou il existe au moins deux valeurs I et I' entre 1 et n, telle que MI≠MI'.

L'invention a encore pour objet un procédé de fabrication d'une nappe à angle telle que décrite ci-dessus s'étendant selon une direction principale, dans lequel :
- on découpe plusieurs bandes dans une nappe selon l'invention de sorte que chaque bande s'étende selon une direction principale et que les monofilaments métalliques de chaque bande fassent un angle compris entre 10° et 40° avec la direction principale de la bande,
- on aboute deux extrémités d'au moins deux bandes précédemment obtenues de façon à obtenir la nappe dans laquelle les monofilaments métalliques font un angle compris entre 10° et 40° avec la direction principale de la nappe.

L'invention sera mieux comprise à la lecture de la description qui va suivre, donnée uniquement à titre d'exemple non limitatif et faite en se référant aux dessins dans lesquels:
- la figure 1 illustre un bandage selon l'invention ;
- la figure 2 illustre une nappe à angle du bandage de la figure 1 selon un premier mode de réalisation de l'invention ;
- la figure 3 illustre la nappe à angle de la figure 2 selon le plan de coupe III-III' ;
- les figures 4 à 6 illustrent des nappes à angle respectivement selon des deuxième, troisième et quatrième modes de réalisation ;
- la figure 7 est un schéma illustrant les étapes du procédé selon l'invention ;
- la figure 8 illustre des premier et deuxième dispositifs de dressage de monofilaments métalliques d'une nappe selon l'invention ;
- la figure 9 illustre le premier dispositif de dressage de la figure 8 ;
- la figure 10 illustre un dispositif de fabrication d'une nappe droite selon l'invention ;
- la figure 11 illustre une étape de découpage de bandes permettant de fabriquer la nappe à angle selon l'invention des figures 1, 2 et 3 à partir de la nappe droite selon l'invention fabriquée à la figure 10.

Dans la description suivante, dans l'emploi du terme « radial », il convient de distinguer plusieurs utilisations différentes du mot par la personne du métier. Premièrement, l'expression se réfère à un rayon du bandage. C'est dans ce sens qu'on dit d'un point P1 qu'il est « radialement intérieur » à un point P2 (ou « radialement à l'intérieur » du point P2) s'il est plus près de l'axe de rotation du bandage que le point P2. Inversement, un point P3 est dit « radialement extérieur à » un point P4 (ou « radialement à l'extérieur » du point P4) s'il est plus éloigné de l'axe de rotation du bandage que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Une direction « axiale » est une direction parallèle à l'axe de rotation du bandage. Un point P5 est dit « axialement intérieur » à un point P6 (ou «axialement à l'intérieur » du point P6) s'il est plus près du plan médian M du bandage que le point P6. Inversement, un point P7 est dit « axialement extérieur à » un point P8 (ou « axialement à l'extérieur » du point P8) s'il est plus éloigné du plan médian M du bandage que le point P8.

Le « plan médian » M du bandage est le plan qui est normal à l'axe de rotation du bandage et qui se situe à équidistance des structures annulaires de renfort de chaque bourrelet.

Une direction « circonférentielle » est une direction qui est perpendiculaire à la fois à un rayon du bandage et à la direction axiale.

D'autre part, tout intervalle de valeurs désigné par l'expression « de a à b » signifie le domaine de valeurs allant de la borne « a » jusqu'à la borne « b » c'est-à-dire incluant les bornes strictes « a » et « b ».

### BANDAGE ET NAPPES A ANGLE SELON L'INVENTION

Dans les figures, on a représenté un repère X, Y, Z correspondant aux directions habituelles respectivement axiale (X), radiale (Y) et circonférentielle (Z) d'un bandage.

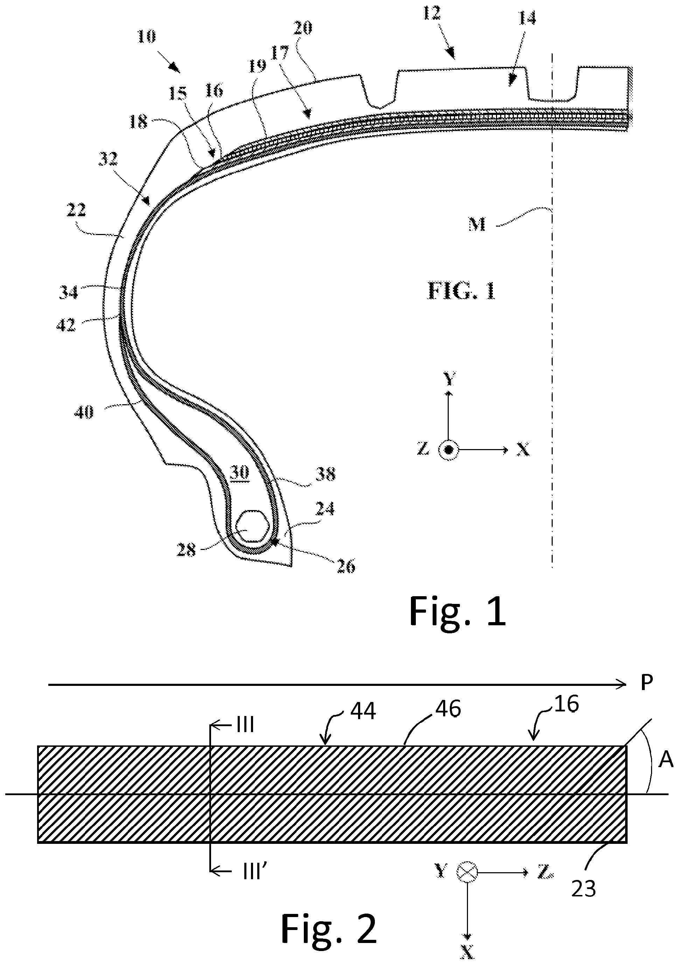

On a représenté sur la figure 1 un bandage, en l'espèce un bandage pneumatique, conforme à un premier mode de réalisation de l'invention et désigné par la référence générale 10. Le bandage 10 est sensiblement de révolution autour d'un axe sensiblement parallèle à la direction axiale X. Le bandage 10 est ici destiné à un véhicule de tourisme.

Le bandage 10 comporte un sommet 12 comprenant une armature de sommet 14 comprenant une armature de travail 15 comprenant deux nappes de travail 16, 18 d'éléments de renfort selon l'invention et une armature 17 de frettage comprenant une nappe de frettage 19. L'armature de sommet 14 est surmontée d'une bande de roulement 20. Ici, l'armature de frettage 17, ici la nappe de frettage 19, est radialement intercalée entre l'armature de travail 15 et la bande de roulement 20.

Deux flancs 22 prolongent le sommet 12 radialement vers l'intérieur. Le bandage 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est radialement intercalée entre l'armature de carcasse 32 et la bande de roulement 20. Chaque flanc 22 relie chaque bourrelet 24 au sommet 14.

L'armature de carcasse 32 comporte de préférence une seule nappe de carcasse 34 d'éléments de renfort textiles radiaux. L'armature de carcasse 32 est ancrée à chacun des bourrelets 24 par un retournement autour de la tringle 28 de manière à former dans chaque bourrelet 24 un brin aller 38 s'étendant depuis les bourrelets 24 à travers les flancs 22 jusque dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12.

Chaque nappe de travail 16, 18, de frettage 19 et de carcasse 34 comprend une matrice polymérique dans laquelle sont noyés des éléments de renfort de la nappe correspondante. Chaque matrice polymérique, ici une matrice élastomérique, des nappes de travail 16, 18, de frettage 19 et de carcasse 34 est réalisée dans une composition conventionnelle pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs.

La nappe de frettage 19 comprend des éléments de renfort textiles de frettage formant un angle au plus égal à 10°, de préférence allant de 5° à 10° avec la direction circonférentielle Z du bandage 10. En l'espèce, chaque élément de renfort textile de frettage est réalisé dans un matériau thermorétractile, ici en polyamide 66. Chaque élément de renfort textile de frettage comprend deux brins multifilamentaires réalisés dans un matériau thermorétractile, ici en polyamide 66, qui sont surtordus individuellement à 250 tours.m⁻¹ dans un sens puis retordus ensemble à 250 tours.m⁻¹ dans le sens opposé. Les deux brins multifilamentaires sont enroulés en hélice l'un autour de l'autre. Chaque brin multifilamentaire présente un titre égal à 140 tex. La contraction thermique CT de chaque élément de renfort textile de frettage est environ égale à environ 7%.

La nappe de carcasse 34 comprend des éléments de renfort textiles radiaux de carcasse formant un angle allant de 65° à 90° avec la direction circonférentielle Z du bandage 10. En l'espèce, chaque élément de renfort textile de carcasse comprend deux brins multifilamentaires réalisés en polyester, ici en PET, qui sont surtordus individuellement à 420 tours.m⁻¹ dans un sens puis retordus ensemble à 420 tours.m⁻¹ dans le sens opposé. Les deux brins multifilamentaires de carcasse sont enroulés en hélice l'un autour de l'autre. Chaque brin multifilamentaire de carcasse présente un titre égal à 144 tex.

On a représenté sur la figure 2, la nappe de travail 16 selon l'invention. La nappe de travail 16 s'étend selon une direction principale P. Une fois la nappe de travail 16 incorporée dans le bandage 10, la direction principale P de la nappe de travail 16 est sensiblement parallèle à la direction circonférentielle Z du bandage 10. La nappe de travail 16 comprend des éléments de renfort métalliques 44. Chaque élément de renfort 44 comprend, ici est constitué, d'un monofilament métallique 46 noyé dans une matrice polymérique 23 telle que décrite ci-dessus.

Les monofilaments métalliques 46 de la nappe de travail 16 sont sensiblement parallèles les uns par rapport aux autres et font un angle A allant de 10° et 40°, de préférence allant de 20° à 30° et ici égal à 26° avec la direction circonférentielle Z du bandage 10. Chaque monofilament métallique 46, est ici en acier revêtu d'un revêtement de protection comprenant par exemple du laiton ou du zinc. Chaque monofilament métallique 46 présente un diamètre allant de 0,10 mm à 0,50 mm, de préférence de 0,20 mm à 0,40 mm et plus préférentiellement de 0,25 mm à 0,35 mm et ici égal à 0,30 mm.

La nappe de travail 18 selon l'invention présente des caractéristiques identiques celles de la nappe de travail 16 à l'exception de l'orientation des monofilaments métalliques 46 qui forment un angle B allant de 10° et 40°, de préférence allant de 20° à 30° et ici égal à 26°, l'angle B étant opposé à l'angle A. En d'autres termes, les éléments de renfort des nappes de travail 16 et 18 sont croisés.

Du fait de l'angle A ou B que fait chaque monofilament métallique 46 avec la direction circonférentielle Z du bandage 10, chaque nappe de travail 16, 18 est dite à angle.

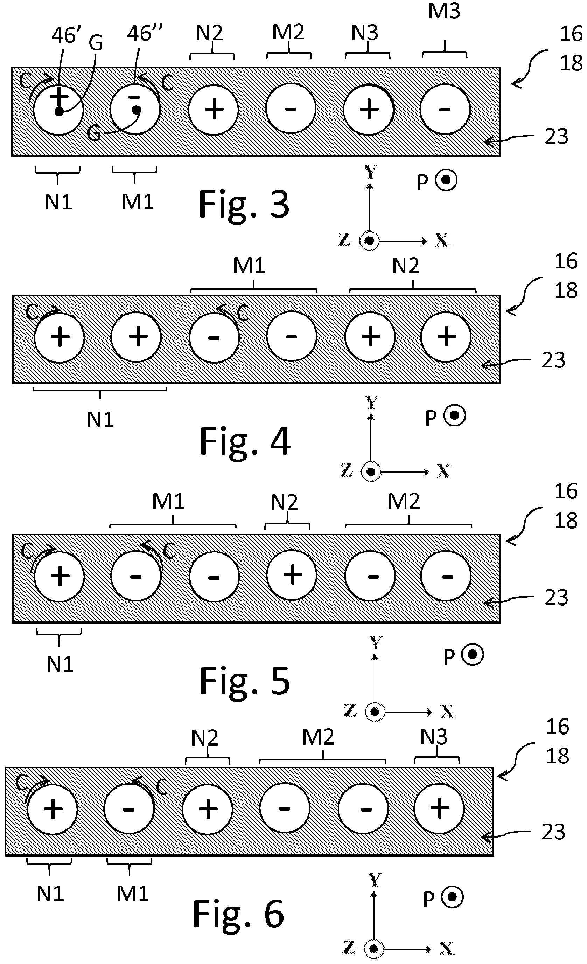

Comme représenté sur la figure 3, chaque nappe à angle de travail 16, 18 comprend des premier et deuxièmes groupes de monofilaments métalliques 46' et 46". Chaque monofilament métallique 46', 46" présente un axe principal G confondu avec son axe de révolution. Chaque monofilament métallique 46' du premier groupe présente une déformation élastique en torsion C positive dans un premier sens autour de son axe principal, par exemple dans le sens horaire sur la figure 3. Chaque monofilament métallique 46" du deuxième groupe présente une déformation élastique en torsion C négative dans un deuxième sens autour de son axe principal, par exemple le sens anti-horaire sur la figure 3. Le premier sens est donc opposé au deuxième sens.

Dans chaque nappe à angle de travail 16, 18, les monofilaments métalliques 46', 46" sont agencés les uns à côtés des autres de façon à alterner un ou plusieurs monofilaments métalliques 46' du premier groupe avec un ou plusieurs monofilaments métalliques 46" du deuxième groupe.

Chaque nappe comprend m successions de Ni≥1 monofilaments métalliques 46' du premier groupe, i allant de 1 à m, et n successions de Mj≥1 monofilaments métalliques 46" du deuxième groupe, j allant de 1 à n. Chaque succession Ni est adjacente à au moins une succession Mj et, à l'exception des successions situées aux bords de la nappe, chaque succession Ni, Mj est adjacente à deux successions respectivement Mj, Ni.

Dans le mode de réalisation illustré sur la figure 3, la nappe comprend m=3 successions de monofilaments métalliques 46' du premier groupe et n=3 successions de monofilaments métalliques 46" du deuxième groupe. Pour chaque succession de Ni≥1 monofilaments métalliques 46' du premier groupe, on a N1=N2=N3=1. Pour chaque succession de Mj≥1 monofilaments métalliques 46" du deuxième groupe, on M1=M2=M3=1. Ainsi, les monofilaments métalliques 46', 46" sont agencés les uns à côtés des autres de façon à alterner un monofilament métallique 46' du premier groupe avec un monofilament métallique 46" du deuxième groupe.

La valeur absolue de la déformation élastique en torsion C de chaque monofilament métallique 46', 46" est telle que |C| ≤ 6 tours par dix mètres de monofilament métallique 46', 46".

La moyenne S des déformations élastiques en torsion des monofilaments de la nappe est telle que -0,25 tours par dix mètres de monofilament métallique ≤ S ≤ +0,25 tours par dix mètres de monofilament métallique.

Dans le mode de réalisation illustré sur la figure 3 (qui illustre une nappe à angle comprenant un nombre réduit de monofilaments métalliques à des fins de clarté et de concision de l'exposé de l'invention), chaque monofilament métallique 46' du premier groupe présente une déformation élastique en torsion telle que C<+6 tours par dix mètres de monofilament métallique 46', de préférence C<+5 tours par dix mètres de monofilament métallique 46', en l'espèce C=+3,5 tours par dix mètres de monofilament métallique 46'. Chaque monofilament métallique 46" du deuxième groupe présente une déformation élastique en torsion telle que C>-6 tours par dix mètres de monofilament métallique 46", de préférence C>-5 tours par dix mètres de monofilament métallique 46' (|C|<6 tours par dix mètres de monofilament métallique 46", |C|<5 tours par dix mètres de monofilament métallique 46"), en l'espèce C=-3,1 tours par dix mètres de monofilament métallique 46" (|C|=25 tours par dix mètres de monofilament métallique 46"). Ainsi, la moyenne S est égale à S=3x(+3,5-3,1)/6=+0,20 tours par dix mètres de monofilament métallique 46', 46".

On a représenté sur les figures 4, 5 et 6 respectivement des deuxième, troisième et quatrième modes de réalisation de nappes à angle selon l'invention. Les éléments analogues à ceux du premier mode de réalisation sont désignés par des références identiques.

En référence à la figure 4, à la différence du premier mode de réalisation, la nappe à angle du deuxième mode de réalisation comprend m=2 successions de monofilaments métalliques 46' du premier groupe et n=1 succession de monofilaments métalliques 46" du deuxième groupe. Pour chaque succession de Ni≥1 monofilaments métalliques 46' du premier groupe, on a N1=N2=2. Pour la succession de Mj≥1 monofilaments métalliques 46" du deuxième groupe, on M1=2. Ainsi, les monofilaments métalliques 46', 46" sont agencés les uns à côtés des autres de façon à alterner deux monofilaments métalliques 46' du premier groupe avec deux monofilaments métalliques 46" du deuxième groupe.

En référence à la figure 5, à la différence du premier mode de réalisation, la nappe à angle du troisième mode de réalisation comprend m=2 successions de monofilaments métalliques 46' du premier groupe et n=2 successions de monofilaments métalliques 46" du deuxième groupe. Pour chaque succession de Ni≥1 monofilaments métalliques 46' du premier groupe, on a N1=N2=1. Pour chaque succession de Mj≥1 monofilaments métalliques 46" du deuxième groupe, on M1=M2=2. Ainsi, les monofilaments métalliques 46', 46" sont agencés les uns à côtés des autres de façon à alterner un monofilament métallique 46' du premier groupe avec deux monofilaments métalliques 46" du deuxième groupe.

En référence à la figure 6, à la différence du premier mode de réalisation, la nappe à angle du troisième mode de réalisation comprend m=3 successions de monofilaments métalliques 46' du premier groupe et n=2 successions de monofilaments métalliques 46" du deuxième groupe. Contrairement aux modes de réalisation précédents dans lesquels, pour chaque succession, Ni=N et Mj=M, il existe, dans le mode de réalisation de la figure 6, au moins deux valeurs k et k' entre 1 et m, telle que Nk≠Nk' et/ou il existe au moins deux valeurs I et I' entre 1 et n, telle que MI≠MI'. En l'espèce, pour chaque succession de Ni≥1 monofilaments métalliques 46' du premier groupe, on a N1=N2=N3=1 et il existe au moins deux valeurs I et I' entre 1 et n, telle que MI≠MI'. Ici, on a M1=1 et M2=2. On pourrait également envisager une variante dans laquelle au lieu d'avoir Ni=N pour i allant de 1 à m, il existerait au moins deux valeurs k et k' entre 1 et m, telle que Nk#Nk'.

### NAPPE DROITE SELON L'INVENTION, PROCEDE DE FABRICATION D'UNE NAPPE DROITE ET D'UNE NAPPE A ANGLE SELON L'INVENTION

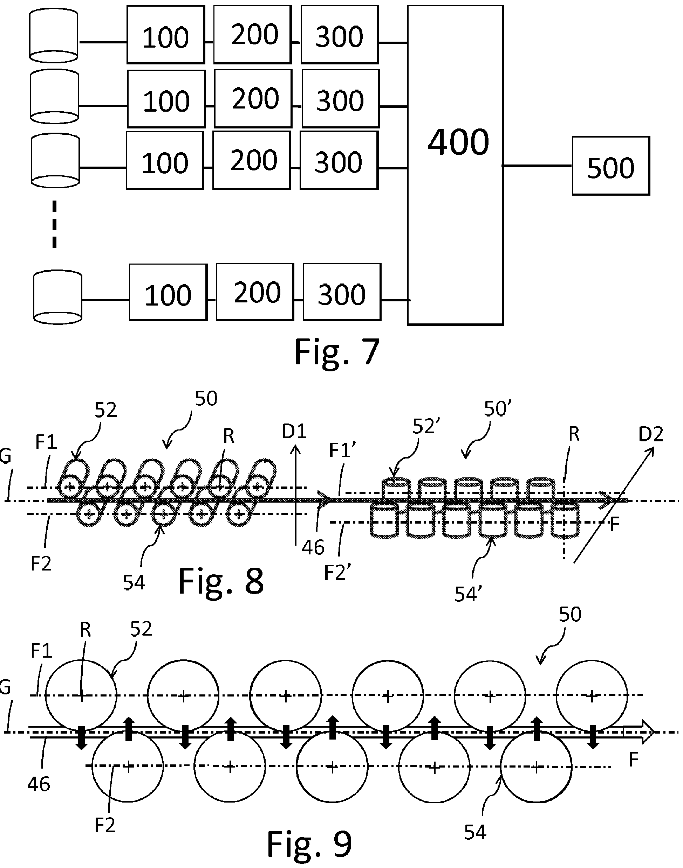

On va maintenant décrire un procédé de fabrication de nappes droite et à angle selon l'invention en référence aux figures 7 à 11.

En référence à la figure 7, lors d'une étape 100, on fabrique un monofilament 46 de diamètre d compris entre 0,10 mm et 0,50 mm à partir d'un monofilament métallique de diamètre D compris entre 0,75 mm et 2,5 mm. Pour ce faire, la première étape 100 comprend une série ininterrompue d'étapes 100₁ - 100ₚ de tréfilage du monofilament métallique d'un diamètre D vers un diamètre d. Chaque étape 100₁-100ₚ consiste à faire passer le monofilament dans une filière de diamètre d'ᵢ, i étant compris entre 1 et p, d'ᵢ étant compris entre d et D, le diamètre d'ᵢ de chaque filière étant décroissant dans le sens de défilement du monofilament métallique. Une telle étape 100 est bien connue de l'homme du métier.

Puis, le procédé comprend des première et deuxième étapes 200 et 300 de dressage du monofilament métallique 46 de diamètre d afin de réduire les contraintes résiduelles présentes en surface du monofilament métallique 46. Lors de ces étapes 200 et 300, on réduit les contraintes résiduelles de chaque monofilament métallique 46 en exerçant des efforts sensiblement perpendiculairement à l'axe principal G du monofilament métallique 46 au moyen de premier et de deuxième dispositifs 50, 50' de dressage illustré sur la figure 8. Le premier dispositif de dressage est illustré en détails sur la figure 9.

Chaque premier et deuxième dispositif de dressage 50, 50' comprend une succession d'une première série d'éléments presseurs 52, 52' et une succession d'une deuxième série d'éléments presseurs 54, 54'.

Les éléments presseurs 52, 52' de la première série de chaque premier et deuxième dispositif de dressage 50, 50' exerçant des efforts sur le monofilament métallique 46 en sens opposé aux éléments presseurs 54, 54' respectivement de la deuxième série de chaque premier et deuxième dispositif de dressage 50, 50'. On a représenté ces efforts par des flèches sur la figure 9.

Les éléments presseurs 52, 54 du premier dispositif de dressage 50 exercent leurs efforts selon une direction D1 sensiblement perpendiculaire à la direction D2 selon laquelle les éléments presseurs 52', 54' du deuxième dispositif de dressage 50' exercent leurs efforts.

En l'espèce, chaque élément presseur 52, 52', 54, 54' comprend une poulie montée en rotation autour d'un axe R. Les axes R des éléments presseurs 52, 54 de la première et deuxième série du premier dispositif de dressage 50 sont sensiblement alignés les uns avec les autres le long respectivement de première et deuxième directions F1, F2 sensiblement parallèles à la direction de défilement F du monofilament métallique 46. De façon analogue, les axes des éléments presseurs 52', 54' de la première et deuxième série du deuxième dispositif de dressage 50' sont sensiblement alignés les uns avec les autres le long respectivement de première et deuxième directions F1', F2' sensiblement parallèles à la direction de défilement F du monofilament métallique 46.

Puis, dans une étape ultérieure de stockage (non illustrée), postérieure aux étapes de dressages 200, 300, on stocke chaque monofilament métallique 46 sur une bobine de stockage. Chaque bobine de stockage comprend un indicateur d'appartenance du monofilament métallique au premier ou au deuxième groupe ainsi que la valeur de la déformation élastique en torsion du monofilament métallique. En l'espèce, lorsque le monofilament métallique 46' présente une déformation élastique en torsion dans le premier sens, ici le sens horaire, on appose un autocollant vert sur la bobine de stockage et on y inscrit la valeur de la déformation élastique en torsion, +3 pour le premier mode de réalisation de la figure 3. De façon analogue, lorsque le monofilament métallique 46" présente une déformation élastique en torsion dans le deuxième sens, ici le sens anti-horaire, on appose un autocollant rouge sur la bobine de stockage et on y inscrit la valeur de la déformation élastique en torsion, -2 pour le premier mode de réalisation de la figure 3.

Puis dans une étape 400, on agence les monofilaments métalliques 46', 46" les uns à côté des autres de façon à alterner un ou plusieurs monofilaments métalliques 46' du premier groupe avec un ou plusieurs monofilaments métalliques 46" du deuxième groupe et de façon à respecter la condition sur la moyenne S des déformations élastiques en torsion, à savoir la moyenne S des déformations élastiques en torsion des monofilaments métalliques 46 est telle que -0,25 tours par dix mètres de monofilaments métalliques ≤ S ≤ +0,25 tours par dix mètres de monofilaments métalliques.

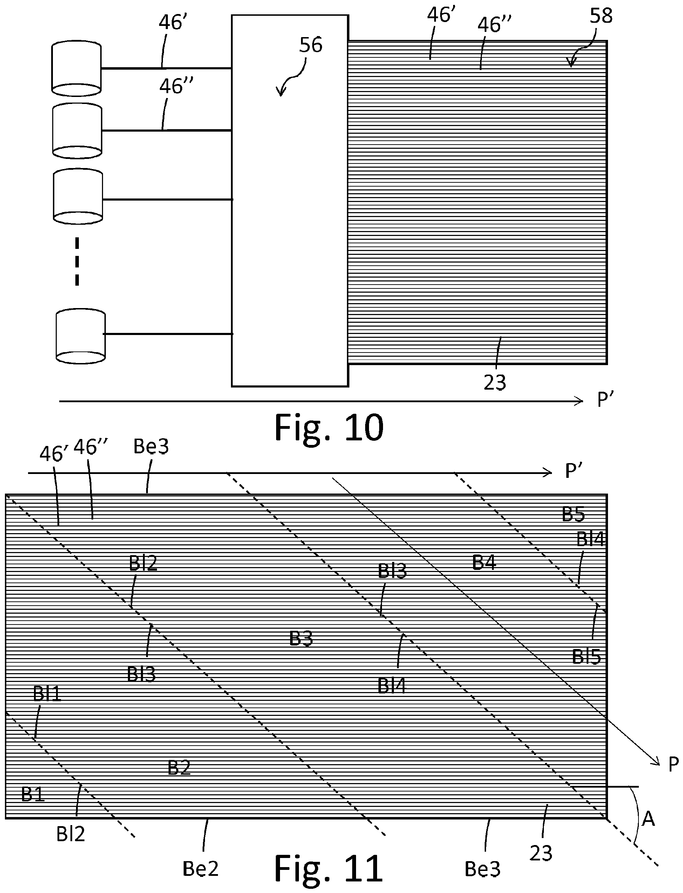

On noie les monofilaments métalliques 46', 46" dans la matrice polymérique 23 au moyen d'une calandre 56 comme cela est représenté sur la figure 10. Une telle étape de calandrage ainsi qu'une calandre adaptée sont notamment décrites dans EP2047962. On obtient alors une nappe droite 58 selon l'invention dans laquelle les monofilaments métalliques 46', 46" sont sensiblement parallèles les uns par rapport aux autres et à une direction principale P' de la nappe droite 58.

Puis, dans une étape 500 schématisée sur la figure 11, on fabrique la nappe à angle 16, 18 des figures 2 et 3 telle que décrite précédemment à partir de la nappe droite 58.

Pour cela, on découpe plusieurs bandes Bi dans la nappe droite 58 de sorte que chaque bande Bi s'étende selon la direction principale P et que les monofilaments métalliques 46 de chaque bande Bi fassent l'angle A (ou B pour la nappe 18) compris entre 10° et 40° avec la direction principale de la bande Bi, ici un angle égal à 26°. Chaque bande Bi ainsi obtenue présente deux bords longitudinaux Bli ainsi que deux extrémités Bei.

Puis, on aboute deux à deux les extrémités Bei de plusieurs bandes Bi précédemment obtenues de façon à obtenir la nappe à angle 16, 18 dans laquelle les monofilaments métalliques 46 font un angle compris entre 10° et 40° avec la direction principale P de la nappe à angle.

## Revendications

1. Nappe (58) s'étendant selon une direction principale (P') comprenant :
- une matrice polymérique (23),
- des monofilaments métalliques (46) noyés dans la matrice polymérique (23), les monofilaments métalliques (46) étant sensiblement parallèles les uns par rapport aux autres et à la direction principale (P') de la nappe (58), chaque monofilament métallique (46) présentant un axe principal (G) et une déformation élastique en torsion autour de son axe principal (G),
la nappe (58) comprenant des premier et deuxième groupes de monofilaments métalliques (46), chaque monofilament métallique (46') du premier groupe présentant une déformation élastique en torsion dans un premier sens autour de son axe principal (G), chaque monofilament métallique (46") du deuxième groupe présentant une déformation élastique en torsion dans un deuxième sens autour de son axe principal (G), le premier sens étant opposé au deuxième sens, et étant entendu que la déformation élastique en torsion est positive dans le premier sens et négative dans le deuxième sens, les monofilaments métalliques (46) étant tels que :
∘ la valeur absolue de la déformation élastique en torsion C de chaque monofilament métallique (46) est telle que |C| ≤ 6 tours par dix mètres de monofilament métallique (46), et
∘ la moyenne S des déformations élastiques en torsion des monofilaments métalliques (46) de la nappe (58) est telle que -0,25 tours par dix mètres de monofilaments métalliques ≤ S ≤ +0,25 tours par dix mètres de monofilaments métalliques,
les monofilaments métalliques (46) étant agencés les uns à côté des autres de façon à alterner un ou plusieurs monofilaments métalliques (46') du premier groupe avec un ou plusieurs monofilaments métalliques (46") du deuxième groupe.

2. Nappe (16, 18) s'étendant selon une direction principale (P) comprenant :
- une matrice polymérique (23),
- des monofilaments métalliques (46) noyés dans la matrice polymérique (23), les monofilaments métalliques (46) étant sensiblement parallèles les uns par rapport aux autres et faisant un angle (A) compris entre 10° et 40° avec la direction principale (P) de la nappe (16, 18), chaque monofilament métallique (46) présentant un axe principal (G) et une déformation élastique en torsion autour de son axe principal (G),
la nappe (16, 18) comprenant des premier et deuxièmes groupes de monofilaments métalliques (46), chaque monofilament métallique (46') du premier groupe présentant une déformation élastique en torsion dans un premier sens autour de son axe principal (G), chaque monofilament métallique (46") du deuxième groupe présentant une déformation élastique en torsion dans un deuxième sens autour de son axe principal (G), le premier sens étant opposé au deuxième sens, et étant entendu que la déformation élastique en torsion est positive dans le premier sens et négative dans le deuxième sens, les monofilaments métalliques (46) étant tels que :
∘ la valeur absolue de la déformation élastique en torsion C de chaque monofilament (46) métallique est telle que |C| ≤ 6 tours par dix mètres de monofilament métallique (46), et
∘ la moyenne S des déformations élastiques en torsion des monofilaments métalliques (46) de la nappe (16, 18) est telle que -0,25 tours par dix mètres de monofilaments métalliques ≤ S ≤ +0,25 tours par dix mètres de monofilaments métalliques,
les monofilaments métalliques (46) étant agencés les uns à côté des autres de façon à alterner un ou plusieurs monofilaments métalliques (46') du premier groupe avec un ou plusieurs monofilaments métalliques (46") du deuxième groupe.

3. Bandage (10) comprenant au moins une nappe (16, 18) selon l'une quelconque des revendications précédentes.

4. Procédé de fabrication d'une nappe (58) s'étendant selon une direction principale comprenant :
- une matrice polymérique (23),
- des monofilaments métalliques (46) noyés dans la matrice polymérique (23), les monofilaments métalliques (46) étant sensiblement parallèles les uns par rapport aux autres et à la direction principale (P') de la nappe (58), chaque monofilament métallique (46) présentant un axe principal (G) et une déformation élastique en torsion autour de son axe principal (G),
la nappe (58) comprenant des premier et deuxième groupes de monofilaments métalliques (46), chaque monofilament métallique (46') du premier groupe présentant une déformation élastique en torsion dans un premier sens autour de son axe principal (G), chaque monofilament métallique (46") du deuxième groupe présentant une déformation élastique en torsion dans un deuxième sens autour de son axe principal (G), le premier sens étant opposé au deuxième sens, et étant entendu que la déformation élastique en torsion est positive dans le premier sens et négative dans le deuxième sens, les monofilaments métalliques (46) étant tels que :
∘ la valeur absolue de la déformation élastique en torsion C de chaque monofilament métallique (46) est telle que |C| ≤ 6 tours par dix mètres de monofilament métallique (46), et
∘ la moyenne S des déformations élastiques en torsion des monofilaments métalliques (46) de la nappe (58) est telle que -0,25 tours par dix mètres de monofilaments métalliques ≤ S ≤ +0,25 tours par dix mètres de monofilaments métalliques,
procédé comprenant une étape de calandrage (400) au cours de laquelle :
- on agence les monofilaments métalliques (46) les uns à côté des autres de façon à alterner un ou plusieurs monofilaments métalliques (46') du premier groupe avec un ou plusieurs monofilaments métalliques (46") du deuxième groupe ;
- on noie les monofilaments métalliques (46) dans la matrice polymérique (23).

5. Procédé selon la revendication précédente, comprenant, préalablement à l'étape de calandrage (400), une étape de dressage (200, 300) dans laquelle on réduit les contraintes résiduelles de chaque monofilament métallique (46) en exerçant des efforts sensiblement perpendiculairement à l'axe principal (G) du monofilament métallique (46).

6. Procédé selon la revendication précédente, dans lequel on exerce les efforts au moyen d'un dispositif de dressage (50, 50') comprenant :
- une succession d'une première série d'éléments presseurs (52, 52')
- une succession d'une deuxième série d'éléments presseurs (54, 54') les éléments presseurs (52, 52') de la première série exerçant des efforts sur le monofilament métallique (46) en sens opposé aux éléments presseurs (54, 54') de la deuxième série.

7. Procédé selon la revendication précédente, dans lequel chaque élément presseur (52, 54, 52', 54') comprend une poulie montée en rotation autour d'un axe (R), les axes (R) des éléments presseurs (52, 54, 52', 54') de chaque première et deuxième série étant sensiblement alignés les uns avec les autres le long respectivement de première et deuxième directions (F1, F2, F1', F2') sensiblement parallèles à la direction de défilement (F) du monofilament métallique (46).

8. Procédé selon la revendication 6 ou 7, dans lequel on exerce les efforts au moyen de premier et de deuxième dispositifs (50, 50') de dressage, chaque premier et deuxième dispositif de dressage (50, 50') comprenant :
- une succession d'une première série d'éléments presseurs (52, 52')
- une succession d'une deuxième série d'éléments presseurs (54, 54') les éléments presseurs de la première série (52, 52') de chaque premier et deuxième dispositif de dressage (50, 50') exerçant des efforts sur le monofilament métallique en sens opposé aux éléments presseurs (54, 54') respectivement de la deuxième série de chaque premier et deuxième dispositif de dressage (50, 50').

9. Procédé selon la revendication précédente, dans lequel les éléments presseurs (52, 54) du premier dispositif de dressage (50) exercent leurs efforts selon une direction (D1) sensiblement perpendiculaire à la direction (D2) selon laquelle les éléments presseurs (52', 54') du deuxième dispositif de dressage (50') exercent leurs efforts.

10. Procédé de fabrication d'une nappe (16, 18) s'étendant selon une direction principale, **caractérisé en ce que** :
- on découpe plusieurs bandes (Bi) dans une nappe (58) selon la revendication 1 de sorte que chaque bande (Bi) s'étende selon une direction principale (P) et que les monofilaments métalliques (46) de chaque bande (Bi) fassent un angle (A) compris entre 10° et 40° avec la direction principale (P) de la bande (Bi),
- on aboute deux extrémités (Bei) d'au moins deux bandes (Bi) précédemment obtenues de façon à obtenir la nappe (16, 18) dans laquelle les monofilaments métalliques (46) font un angle (A) compris entre 10° et 40° avec la direction principale (P) de la nappe (16, 18).

## Patentansprüche

1. Lage (58), die sich entlang einer Hauptrichtung (P') erstreckt, umfassend:
- eine Polymermatrix (23),
- Metallmonofilamente (46), die in die Polymermatrix (23) eingebettet sind, wobei die Metallmonofilamente (46) im Wesentlichen parallel zueinander und zur Hauptrichtung (P') der Lage (58) sind, wobei jedes Metallmonofilament (46) eine Hauptachse (G) und eine elastische Torsionsverformung um seine Hauptachse (G) herum aufweist,
wobei die Lage (58) erste und zweite Gruppen von Metallmonofilamenten (46) umfasst, wobei jedes Metallmonofilament (46') der ersten Gruppe eine elastische Torsionsverformung in eine erste Richtung um seine Hauptachse (G) herum aufweist, wobei jedes Metallmonofilament (46") der zweiten Gruppe eine elastische Torsionsverformung in eine zweite Richtung um seine Hauptachse (G) herum aufweist, wobei die erste Richtung entgegengesetzt zur zweiten Richtung ist und wobei die elastische Torsionsverformung in die erste Richtung positiv und in die zweite Richtung negativ ist, wobei die Metallmonofilamente (46) dergestalt sind, dass:
∘ der absolute Wert der elastischen Torsionsverformung C jedes Metallmonofilaments (46) dergestalt ist, dass |C| ≤ 6 Umdrehungen je zehn Meter Metallmonofilament (46) und
∘ der Mittelwert S der elastischen Torsionsverformungen der Metallmonofilamente (46) der Lage (58) dergestalt ist, dass -0,25 Umdrehungen je zehn Meter Metallmonofilamente ≤ S ≤ +0,25 Umdrehungen je zehn Meter Metallmonofilamente,
wobei die Metallmonofilamente (46) nebeneinander so angeordnet sind, dass ein oder mehrere Metallmonofilamente (46') der ersten Gruppe mit einem oder mehreren Metallmonofilamenten (46") der zweiten Gruppe abwechseln.

2. Lage (16, 18), die sich entlang einer Hauptrichtung (P) erstreckt, umfassend:
- eine Polymermatrix (23),
- Metallmonofilamente (46), die in die Polymermatrix (23) eingebettet sind, wobei die Metallmonofilamente (46) im Wesentlichen parallel zueinander sind und einen Winkel (A) zwischen 10° und 40° mit der Hauptrichtung (P) der Lage (16, 18) bilden, wobei jedes Metallmonofilament (46) eine Hauptachse (G) und eine elastische Torsionsverformung um seine Hauptachse (G) herum aufweist,
wobei die Lage (16, 18) erste und zweite Gruppen von Metallmonofilamenten (46) umfasst, wobei jedes Metallmonofilament (46') der ersten Gruppe eine elastische Torsionsverformung in eine erste Richtung um seine Hauptachse (G) herum aufweist, wobei jedes Metallmonofilament (46") der zweiten Gruppe eine elastische Torsionsverformung in eine zweite Richtung um seine Hauptachse (G) herum aufweist, wobei die erste Richtung entgegengesetzt zur zweiten Richtung ist und wobei die elastische Torsionsverformung in die erste Richtung positiv und in die zweite Richtung negativ ist, wobei die Metallmonofilamente (46) dergestalt sind, dass:
∘ der absolute Wert der elastischen Torsionsverformung C jedes Metallmonofilaments (46) dergestalt ist, dass |C| ≤ 6 Umdrehungen je zehn Meter Metallmonofilament (46) und
∘ der Mittelwert S der elastischen Torsionsverformungen der Metallmonofilamente (46) der Lage (16, 18) dergestalt ist, dass -0,25 Umdrehungen je zehn Meter Metallmonofilamente ≤ S ≤ +0,25 Umdrehungen je zehn Meter Metallmonofilamente,
wobei die Metallmonofilamente (46) nebeneinander so angeordnet sind, dass ein oder mehrere Metallmonofilamente (46') der ersten Gruppe mit einem oder mehreren Metallmonofilamenten (46") der zweiten Gruppe abwechseln.

3. Reifen (10) mit mindestens einer Lage (16, 18) nach einem der vorhergehenden Ansprüche.

4. Verfahren zur Herstellung einer Lage (58), die sich entlang einer Hauptrichtung erstreckt, umfassend:
- eine Polymermatrix (23),
- Metallmonofilamente (46), die in die Polymermatrix (23) eingebettet sind, wobei die Metallmonofilamente (46) im Wesentlichen parallel zueinander und zur Hauptrichtung (P') der Lage (58) sind, wobei jedes Metallmonofilament (46) eine Hauptachse (G) und eine elastische Torsionsverformung um seine Hauptachse (G) herum aufweist,
wobei die Lage (58) erste und zweite Gruppen von Metallmonofilamenten (46) umfasst, wobei jedes Metallmonofilament (46') der ersten Gruppe eine elastische Torsionsverformung in eine erste Richtung um seine Hauptachse (G) herum aufweist, wobei jedes Metallmonofilament (46") der zweiten Gruppe eine elastische Torsionsverformung in eine zweite Richtung um seine Hauptachse (G) herum aufweist, wobei die erste Richtung entgegengesetzt zur zweiten Richtung ist und wobei die elastische Torsionsverformung in die erste Richtung positiv und in die zweite Richtung negativ ist, wobei die Metallmonofilamente (46) dergestalt sind, dass:
∘ der absolute Wert der elastischen Torsionsverformung C jedes Metallmonofilaments (46) dergestalt ist, dass |C| ≤ 6 Umdrehungen je zehn Meter Metallmonofilament (46) und
∘ der Mittelwert S der elastischen Torsionsverformungen der Metallmonofilamente (46) der Lage (58) dergestalt ist, dass -0,25 Umdrehungen je zehn Meter Metallmonofilamente ≤ S ≤ +0,25 Umdrehungen je zehn Meter Metallmonofilamente,
wobei das Verfahren einen Schritt des Kalandrierens (400) umfasst, bei dem:
- die Metallmonofilamente (46) nebeneinander so angeordnet werden, dass ein oder mehrere Metallmonofilamente (46') der ersten Gruppe mit einem oder mehreren Metallmonofilamenten (46") der zweiten Gruppe abwechseln;
- die Metallmonofilamente (46) in die Polymermatrix (23) eingebettet werden.

5. Verfahren nach dem vorhergehenden Anspruch, das vor dem Schritt des Kalandrierens (400) einen Schritt des Dressierens (200, 300) umfasst, bei dem die Restspannungen jedes Metallmonofilaments (46) verringert werden, indem Kräfte im Wesentlichen senkrecht zur Hauptachse (G) des Metallmonofilaments (46) ausgeübt werden.

6. Verfahren nach dem vorhergehenden Anspruch, bei dem die Kräfte mittels einer Dressiervorrichtung (50, 50') ausgeübt werden, die umfasst:
- eine Abfolge einer ersten Reihe von Drückelementen (52, 52')
- eine Abfolge einer zweiten Reihe von Drückelementen (54, 54')
wobei die Drückelemente (52, 52') der ersten Reihe in die entgegengesetzte Richtung zu den Drückelementen (54, 54') der zweiten Reihe Kräfte auf das Metallmonofilament (46) ausüben.

7. Verfahren nach dem vorhergehenden Anspruch, bei dem jedes Drückelement (52, 54, 52', 54') eine Rolle umfasst, die drehbar um eine Achse (R) gelagert ist, wobei die Achsen (R) der Drückelemente (52, 54, 52', 54') jeder ersten und zweiten Reihe im Wesentlichen jeweils entlang der ersten und der zweiten Richtung (F1, F2, F1', F2') aufeinander ausgerichtet sind, die im Wesentlichen parallel zur Ablaufrichtung (F) des Metallmonofilaments (46) verlaufen.

8. Verfahren nach Anspruch 6 oder 7, bei dem die Kräfte mittels von ersten und zweiten Dressiervorrichtungen (50, 50') ausgeübt werden, wobei jede erste und zweite Dressiervorrichtung (50, 50') umfasst:
- eine Abfolge einer ersten Reihe von Drückelementen (52, 52')
- eine Abfolge einer zweiten Reihe von Drückelementen (54, 54')
wobei die Drückelemente der ersten Reihe (52, 52') jeder ersten und zweiten Dressiervorrichtung (50, 50') in die entgegengesetzte Richtung zu den Drückelementen (54, 54') der jeweiligen zweiten Reihe jeder ersten und zweiten Dressiervorrichtung (50, 50') Kräfte auf das Metallmonofilament ausüben.

9. Verfahren nach dem vorhergehenden Anspruch, bei dem die Drückelemente (52, 54) der ersten Dressiervorrichtung (50) ihre Kräfte entlang einer Richtung (D1) ausüben, die im Wesentlichen senkrecht zu der Richtung (D2) verläuft, entlang der die Drückelemente (52', 54') der zweiten Dressiervorrichtung (50') ihre Kräfte ausüben.

10. Verfahren zur Herstellung einer Lage (16, 18), die sich entlang einer Hauptrichtung erstreckt, **dadurch gekennzeichnet, dass**:
- mehrere Streifen (Bi) aus einer Lage (58) nach Anspruch 1 derart geschnitten werden, dass sich jeder Streifen (Bi) entlang einer Hauptrichtung (P) erstreckt und dass die Metallmonofilamente (46) jedes Streifens (Bi) einen Winkel (A) zwischen 10° und 40° mit der Hauptrichtung (P) des Streifens (Bi) bilden,
- zwei Enden (Bei) von mindestens zwei zuvor erhaltenen Streifen (Bi) derart zusammengefügt werden, dass die Lage (16, 18) erhalten wird, in der die Metallmonofilamente (46) einen Winkel (A) zwischen 10° und 40° mit der Hauptrichtung (P) der Lage (16, 18) bilden.

## Claims

1. Ply (58) extending along a main direction (P'), comprising:
- a polymer matrix (23),
- metallic monofilaments (46) embedded in the polymer matrix (23), the metallic monofilaments (46) being substantially parallel relative to one another and to the main direction (P') of the ply (58), each metallic monofilament (46) having a main axis (G) and a torsional elastic deformation about its main axis (G),
the ply (58) comprising first and second groups of metallic monofilaments (46), each metallic monofilament (46') of the first group having a torsional elastic deformation in a first direction about its main axis (G), each metallic monofilament (46") of the second group having a torsional elastic deformation in a second direction about its main axis (G), the first direction being opposite to the second direction, and it being understood that the torsional elastic deformation is positive in the first direction and negative in the second direction, the metallic monofilaments (46) being such that:
∘ the absolute value of the torsional elastic deformation C of each metallic monofilament (46) is such that |C| ≤ 6 turns per ten metres of metallic monofilament (46), and
∘ the mean S of the torsional elastic deformations of the metallic monofilaments (46) of the ply (58) is such that -0.25 turn per ten metres of metallic monofilaments ≤ S ≤ +0.25 turn per ten metres of metallic monofilaments,
the metallic monofilaments (46) being arranged next to one another so as to alternate one or more metallic monofilaments (46') of the first group with one or more metallic monofilaments (46") of the second group.

2. Ply (16, 18) extending along a main direction (P), comprising:
- a polymer matrix (23),
- metallic monofilaments (46) embedded in the polymer matrix (23), the metallic monofilaments (46) being substantially parallel relative to one another and making an angle (A) of between 10° and 40° with the main direction (P) of the ply (16, 18), each metallic monofilament (46) having a main axis (G) and a torsional elastic deformation about its main axis (G),
the ply (16, 18) comprising first and second groups of metallic monofilaments (46), each metallic monofilament (46') of the first group having a torsional elastic deformation in a first direction about its main axis (G), each metallic monofilament (46") of the second group having a torsional elastic deformation in a second direction about its main axis (G), the first direction being opposite to the second direction, and it being understood that the torsional elastic deformation is positive in the first direction and negative in the second direction, the metallic monofilaments (46) being such that:
∘ the absolute value of the torsional elastic deformation C of each metallic monofilament (46) is such that |C| ≤ 6 turns per ten metres of metallic monofilament (46), and
∘ the mean S of the torsional elastic deformations of the metallic monofilaments (46) of the ply (16, 18) is such that -0.25 turn per ten metres of metallic monofilaments ≤ S ≤ +0.25 turn per ten metres of metallic monofilaments,
the metallic monofilaments (46) being arranged next to one another so as to alternate one or more metallic monofilaments (46') of the first group with one or more metallic monofilaments (46") of the second group.

3. Tyre (10) comprising at least one ply (16, 18) according to any one of the preceding claims.

4. Process for manufacturing a ply (58) extending along a main direction, comprising:
- a polymer matrix (23),
- metallic monofilaments (46) embedded in the polymer matrix (23), the metallic monofilaments (46) being substantially parallel relative to one another and to the main direction (P') of the ply (58), each metallic monofilament (46) having a main axis (G) and a torsional elastic deformation about its main axis (G),
the ply (58) comprising first and second groups of metallic monofilaments (46), each metallic monofilament (46') of the first group having a torsional elastic deformation in a first direction about its main axis (G), each metallic monofilament (46") of the second group having a torsional elastic deformation in a second direction about its main axis (G), the first direction being opposite to the second direction, and it being understood that the torsional elastic deformation is positive in the first direction and negative in the second direction, the metallic monofilaments (46) being such that:
∘ the absolute value of the torsional elastic deformation C of each metallic monofilament (46) is such that |C| ≤ 6 turns per ten metres of metallic monofilament (46), and
∘ the mean S of the torsional elastic deformations of the metallic monofilaments (46) of the ply (58) is such that -0.25 turn per ten metres of metallic monofilaments ≤ S ≤ +0.25 turn per ten metres of metallic monofilaments,
said process comprising a calendering step (400) during which:
- the metallic monofilaments (46) are arranged next to one another so as to alternate one or more metallic monofilaments (46') of the first group with one or more metallic monofilaments (46") of the second group;
- the metallic monofilaments (46) are embedded in the polymer matrix (23).

5. Process according to the preceding claim, comprising, prior to the calendering step (400), a straightening step (200, 300) in which the residual stresses of each metallic monofilament (46) are reduced by exerting forces substantially perpendicularly to the main axis (G) of the metallic monofilament (46).

6. Process according to the preceding claim, in which the forces are exerted by means of a straightening device (50, 50') comprising:
- a succession of a first series of presser elements (52, 52')
- a succession of a second series of presser elements (54, 54') the presser elements (52, 52') of the first series exerting forces on the metallic monofilament (46) in the opposite direction to the presser elements (54, 54') of the second series.

7. Process according to the preceding claim, in which each presser element (52, 54, 52', 54') comprises a pulley rotatably mounted about an axis (R), the axes (R) of the presser elements (52, 54, 52', 54') of each first and second series being substantially aligned with one another along respectively first and second directions (F1, F2, F1', F2') substantially parallel to the run direction (F) of the metallic monofilament (46).

8. Process according to Claim 6 or 7, in which the forces are exerted by means of first and second straightening devices (50, 50'), each first and second straightening device (50, 50') comprising:
- a succession of a first series of presser elements (52, 52')
- a succession of a second series of presser elements (54, 54') the presser elements of the first series (52, 52') of each first and second straightening device (50, 50') exerting forces on the metallic monofilament in the opposite direction to the presser elements (54, 54') respectively of the second series of each first and second straightening device (50, 50').

9. Process according to the preceding claim, in which the presser elements (52, 54) of the first straightening device (50) exert their forces along a direction (D1) substantially perpendicular to the direction (D2) along which the presser elements (52', 54') of the second straightening device (50') exert their forces.

10. Process for manufacturing a ply (16, 18) extending along a main direction, **characterized in that:**
- several strips (Bi) are cut from a ply (58) according to Claim 1 so that each strip (Bi) extends along a main direction (P) and so that the metallic monofilaments (46) of each strip (Bi) make an angle (A) of between 10° and 40° with the main direction (P) of the strip (Bi),
- two ends (Bei) of at least two strips (Bi) obtained previously are joined so as to obtain the ply (16, 18) in which the metallic monofilaments (46) make an angle (A) of between 10° and 40° with the main direction (P) of the ply (16, 18).
